# EUROPÄISCHE PATENTSCHRIFT

(11) **EP 0 960 835 B1**
(45) Veröffentlichungstag und Bekanntmachung des Hinweises auf die Patenterteilung: **09.01.2002**
(21) Anmeldenummer: 98109721.5
(22) Anmeldetag: 28.05.1998
(51) Int. Cl.: B65G 1/02, A47B 47/00

(54) **Regallager, insbesondere dach- und wandtragendes Hochregallager**
Shelf storage, in particular a roof and wall supporting high shelf storage
Magasin à rayonnage, en particulier magasin à rayonnage surélevé supportant un toit et un mur

(43) Veröffentlichungstag der Anmeldung: 01.12.1999
(73) Patentinhaber: NEDCON MAGAZIJNINRICHTING B.V., NL-7000 AA Doetinchem (NL)
(72) Erfinder: Hollander, Rudolf Richard, 7251 KC Vorden (NL)
(74) Vertreter: Stenger, Watzke & Ring Patentanwälte

(56) Entgegenhaltungen:
- EP-A- 0 551 202
- DE-A- 2 435 968
- US-A- 4 102 108

## Beschreibung

Die Erfindung betrifft ein Regallager, insbesondere dach- und wandtragendes Hochregallager, für vorzugsweise palettisiertes Lagergut, bestehend aus einem Gestell vertikaler Stützen, zwischen denen sich in Ein- und Auslagerungsrichtung erstreckende, horizontale Traversen angeordnet sind, wobei jeweils zwei sich übereinander befindende Traversen durch wenigstens eine diagonale Strebe miteinander verbunden sind.

Derartige Regallager finden eine häufige Anwendung als automatisiertes Verteilzentrum mit einer rechnergesteuerten Ein- und Auslagerung des Lagerguts, das in der Regel auf normgerechten Paletten ruht und mit Hilfe von innerhalb von Regalgassen verfahrbaren Regalbediengeräten am jeweiligen Lagerplatz positionierbar ist. Hochregallager, die eine Höhe von über 12 Meter aufweisen, sind in Form von sogenannten Silolager vorzufinden, bei dem die Regale zugleich die Befestigung der Dach- und Wandverkleidung übernehmen und daher besonderen statischen Anforderungen unterliegen, etwa im Hinblick auf den auf das Silolager einwirkenden Wanddruck.

Die vertikalen Stützen sind dabei vor allem einer Druckbeanspruchung ausgesetzt und müssen folglich auf Knickung ausgelegt sein. Für eine ausreichende Stabilität eines Regallagers sorgen zudem die horizontalen Traversen und diagonalen Streben, welche die auftretenden Kräfte aufnehmen und ableiten.

Die im Stand der Technik bekannten Regallager weisen Stahlkonstruktionen auf, bei denen die horizontalen Traversen aus massiven T-, Doppel-T- oder U-Profilen bestehen, die zwar den statischen Anforderungen genügen, aber ein hohes Eigengewicht autweisen. Da die einzelnen Stützen, Traversen, Streben und Profile vorgefertigt werden und demzufolge an den Ort eines zu errichtenden Regallagers zu transportieren sind, ergeben sich in Folge des hohen Eigengewichts hohe Transport- und damit Herstellungskosten. Ein weiterer Nachteil bekannter Regallager besteht darin, daß die einzelnen Stützen und Streben zumindest teilweise miteinander verschweißt werden, um den statischen Anforderungen zu genügen. Dies bedeutet einen hohen und damit kostenintensiven Montageaufwand. Insbesondere bei sogenannten Knock-Down-Systemen, die eine vollständige Demontage eines Regallagers erfordern, beispielsweise dann, wenn das Regallager vor endgültiger Errichtung zur Abnahme bereits am Ort der Herstellung aufgebaut und zum Transport anschließend wieder demontiert wird, erweisen sich verschweißte Bauteile oder eine hohe Anzahl an Schraub- und Nietverbindungen als äußerst ungünstig. Nachteilig bei bekannten Regallager ist schließlich ein annähernd V-förmige Anordnung diagonaler Streben zwischen zwei sich übereinander befindenden Traversen, bei denen die in die Spitze der V-Form zulaufenden Enden der Streben einen verhältnismäßig weiten Abstand voneinander haben, so daß statisch ungünstige Momente auf die Traversen ausgeübt werden.

Ein Regellager mit den eingangs genannten Merkmalen ist aus der DE 24 35 968 A1 bekannt. Die Verstrebung der vertikalen Stützen erfolgt bei diesem Regal unter Verwendung von Diagonalstreben. Diese sind über Knotenbleche, welche mit den horizontalen Traversen verschweißt sind, mit den Traversen verbunden. Wegen der Verschweißung der Knotenbleche mit den Traversen ergeben sich relativ hohe Vorbereitungs- und Transportkosten, weshalb das bekannte Regallager als Knock-down-System, welches bekanntermaßen eine möglichst leichtgewichtige Ausgestaltung sowie eine einfache Montage und Demontage erfordert, ungeeignet ist.

Der Erfindung liegt die **Aufgabe** zugrunde, ein Regallager, insbesondere dach- und wandtragendes Hochregallager, dahingehend weiterzubilden, daß sich eine leichtgewichtige und vor allem eine einfache Montage/Demontage gewährleistende Bauweise erzielen läßt.

Diese Aufgabe wird bei einem Regallager der eingangs genannten Art dadurch **gelöst,** daß die Traversen aus jeweils zwei parallelen und voneinander beabstandeten Profilen zusammengesetzt sind, zwischen denen die Enden der diagonalen Streben angeordnet und durch jeweils eine einzige Schraubverbindung mit den Traversen lösbar verbunden sind, wobei die beiden Profile einer Traverse an ihren stimseitigen Enden durch eine Anschlußplatte miteinander verbunden sind, die lösbar an den vertikalen Stützen befestigbar ist.

Ein solchermaßen ausgestaltetes Regallager zeichnet sich zunächst durch ein verringertes Gewicht der Traversen aus. Während bei den bekannten Regallagern die Traversen aus U-, T- oder Doppel- T-Profilen bestehen, die aufgrund ihrer einstückigen, massiven Ausgestaltung ein hohes Eigengewicht aufweisen, erlauben die erfindungsgemäßen Traversen trotz der Zusammensetzung aus zwei Profilen aus z. B. kaltgewalztem Dünnblech eine insgesamt leichtgewichtigere Bauweise bei gleicher statischer Sicherheit. Ursächlich hierfür ist vor allem die Anordnung der Enden der diagonalen Streben zwischen den beiden Profilen einer Traverse, wodurch ein optimaler Kraftfluß erreicht wird. Gleichzeitig trägt dies zu einer sicheren lösbaren Verbindung von Traversen und diagonalen Streben bei, in dem diese zwischen den beiden Profilen einer Traverse mittels jeweils einer einzigen Schraubverbindung eingespannt und lagefixiert werden können. Erreicht wird hierdurch die Möglichkeit einer einfachen und schnellen Montage/Demontage. Mit der Verwendung einer einzigen Schraubverbindung macht sich die Erfindung die Erkenntnis zunutze, daß es aus Festigkeitsgründen ausreichend ist, wenn die Enden der diagonalen Strebe zwischen den beiden Profilen der jeweiligen Traverse eingeklemmt werden. Zum Vorteil einer einfachen und schnellen Montage der Traversen trägt ferner bei, daß die beiden zusammen eine Traverse bildenden Profile an ihren stirnseitigen Enden durch eine Anschlußplatte miteinander verbunden sind, die lösbar an den vertikalen Stützen befestigbar ist.

Zweckmäßigerweise ist die Anschlußplatte an die Profile angeschweißt, um eine hohe Festigkeit und gute Verteilung der inneren Kräfte zu erzielen. Eine Steigerung der Festigkeit einer Traverse läßt sich darüber hinaus dadurch erzielen, daß die Anschlußplatte von höherer Materialstärke ist als die Profile. Auf diese Weise läßt sich eine gezielte Verstärkung der Traverse im hochbelasteten Anschlußbereich an die vertikalen Stützen vornehmen, ohne die leichtgewichtige Bauweise merklich zu beeinträchtigen. Zweckmäßig ist ferner, wenn die beiden Profile einer Traverse einen im wesentlichen C-förmigen Querschnitt aufweisen und mit der offenen Seite voneinander abgewandt angeordnet sind. Eine derartige Ausgestaltung der Profile trägt zum einen einer einfachen Fertigung und zum anderen einer hohen Biegefestigkeit Rechnung. Die Anordnung der Profile mit der offenen Seite voneinander abgewandt ermöglicht, daß das zwischen diesen anzuordnende Ende einer diagonalen Strebe eine großflächige Anlagefläche zukommt, die eine zuverlässige Verbindung gewährleistet.

Von besonderem Vorteil ist es weiterhin, sich quer zur Ein- und Auslagerungsrichtung erstreckende, horizontale Tragprofile lösbar mit an den Traversen angeordneten Konsolen zu verbinden, um eine Einlagerung von vorzugsweise palettisiertem Lagergut zu ermöglichen. Durch die Verwendung von Konsolen lassen sich auf einfache Art und Weise die Tragprofile an den Traversen befestigen. Zudem läßt sich die Zugänglichkeit zu Verschraubungsstellen vereinfachen und damit die Montage insgesamt erleichtern. Um bei statisch günstiger Anordnung eine seitliche Führung eingelagerten Lagerguts zu erzielen, wird mit einer weiteren Ausgestaltung der Erfindung vorgeschlagen, daß auf der Unterseite der Traversen jeweils zwei symmetrisch zur Mitte der Traverse angeordnete Konsolen mit beiden Profilen der Traverse verschweißt sind. Die Verschweißung mit beiden Profilen einer Traverse erhöht zugleich deren Biege- und Torsionsfestigkeit. Indem die Traversen mit angeschweißten Konsolen vorgefertigt werden können, ergibt sich ein geringer Montageaufwand am Ort der Errichtung des Regallagers.

Eine statisch besonders günstige und darüber hinaus einfache Anordnung der Tragprofile ist gemäß einem weiteren vorteilhaften Merkmal der Erfindung dann gegeben, wenn Tragprofile an den vertikalen Stützen parallel zu den an den Konsolen befestigten Tragprofilen auf gleicher Höhe angeordnet sind. Auf diese Weise stützt sich beispielsweise eine mit Lagergut bestückte Palette im vorderen Bereich auf den direkt an den vertikalen Stützen angeordneten Tragprofilen ab, während im hinteren Bereich eine Auflagerung auf den an den Konsolen befestigten Tragprofilen stattfindet. Zur Erzielung einer hohen Festigkeit der Tragprofile wird gemäß einem weiteren vorteilhaften Merkmal der Erfindung vorgeschlagen, daß die Tragprofile einen annähernd Σ-förmigen Querschnitt aufweisen.

Vorteilhafterweise sind jeweils zwei sich übereinander befindende Traversen durch zwei symmetrisch vom Bereich des stirnseitigen Endes der oberen in annähernd die Mitte der unteren Traverse zueinander verlaufende diagonale Streben miteinander verbunden. Eine derartige enge V-Anordnung der diagonalen Streben biete eine optimale Aufnahme und Ableitung der inneren Kräfte und ermöglicht zudem eine ungehinderte Anbringung von aus Sicherheitsgründen oftmals vorgeschriebenen Sprinkleranlagen oder dergleichen. Um eine kraftflußgerechte Anlage der Enden der diagonalen Streben zwischen den beiden Profilen einer Traverse zu erzielen, wird in vorteilhafter Weise weiter vorgeschlagen, daß die diagonalen Streben einen im wesentlichen U-förmigen Querschnitt aufweisen und im Bereich ihrer Enden mit jeweils einer einzigen Durchgangsbohrung zum Verbinden mit den Traversen versehen sind. Zudem ist hierdurch eine einfache und kostengünstige Fertigung der Streben sichergestellt, indem diese durch zweimaliges gleichsinniges Biegen eines Bleches geformt werden können.

Eine besonders kostengünstige Fertigung ergibt sich ferner, wenn gemäß einem weiteren Merkmal der Erfindung die Profile der Traversen, die Tragprofile und die diagonalen Streben kaltgewalzt sind. Schließlich wird vorgeschlagen, daß die vertikalen Stützen zum Teil aus warmgewalzten Doppel-T-Profilen und zum Teil aus kaltgewalzten Profilen mit U-förmigem Querschnitt bestehen. Während die kaltgewalzten U-Profile im oberen Bereich eines Hochregallagers eine ausreichende Festigkeit aufweisen, kann es je nach Bauhöhe erforderlich sein, im Sockelbereich eines Hochregallagers warmgewalzte Doppel-T-Profile vorzusehen, um die notwendige Sicherheit zu gewährleisten.

Weitere Einzelheiten, Merkmale und Vorteile des Gegenstandes der Erfindung ergeben sich aus der nachfolgenden Beschreibung eines bevorzugten Ausführungsbeispieles, das in den Zeichnungen dargestellt ist, und zwar zeigen im einzelnen:
- Fig. 1: eine schematische Seitenansicht eines Hochregallagers;
- Fig. 1a: eine vergrößerte Darstellung des in Fig. 1 mit Ia bezeichneten Ausschnitts;
- Fig. 1b: eine vergrößerte Darstellung des in Fig. 1 mit Ib bezeichneten Ausschnitts;
- Fig. 1c: eine vergrößerte Darstellung des in Fig. 1 mit Ic bezeichneten Ausschnitts;
- Fig. 2: einen Querschnitt durch eine diagonale Strebe;
- Fig. 2a: einen Querschnitt durch eine horizontale Traverse;
- Fig. 2b: einen Querschnitt durch eine vertikale Stütze im oberen Bereich des Hochregallagers;
- Fig. 2c: einen Querschnitt durch eine vertikale Stütze im unteren Bereich des Hochregallagers;
- Fig. 3: eine Seitenansicht einer Konsole zum Befestigen eines horizontalen Tragprofils;
- Fig. 3a: eine Frontansicht der Konsole gemäß Fig. 3 und
- Fig. 3b: eine Draufsicht auf die Konsole gemäß Fig. 3.

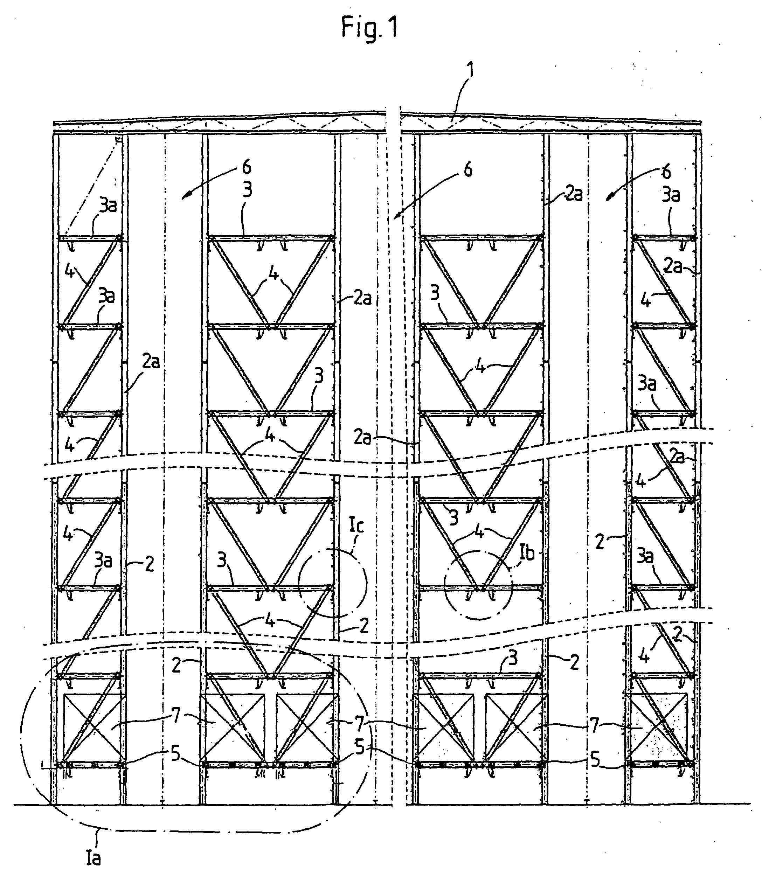

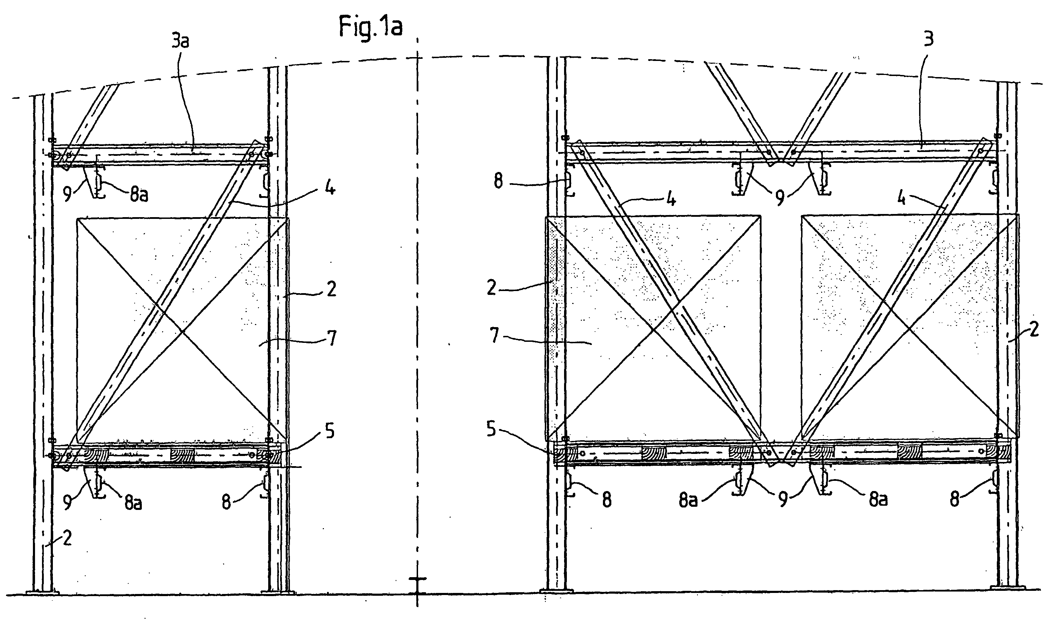

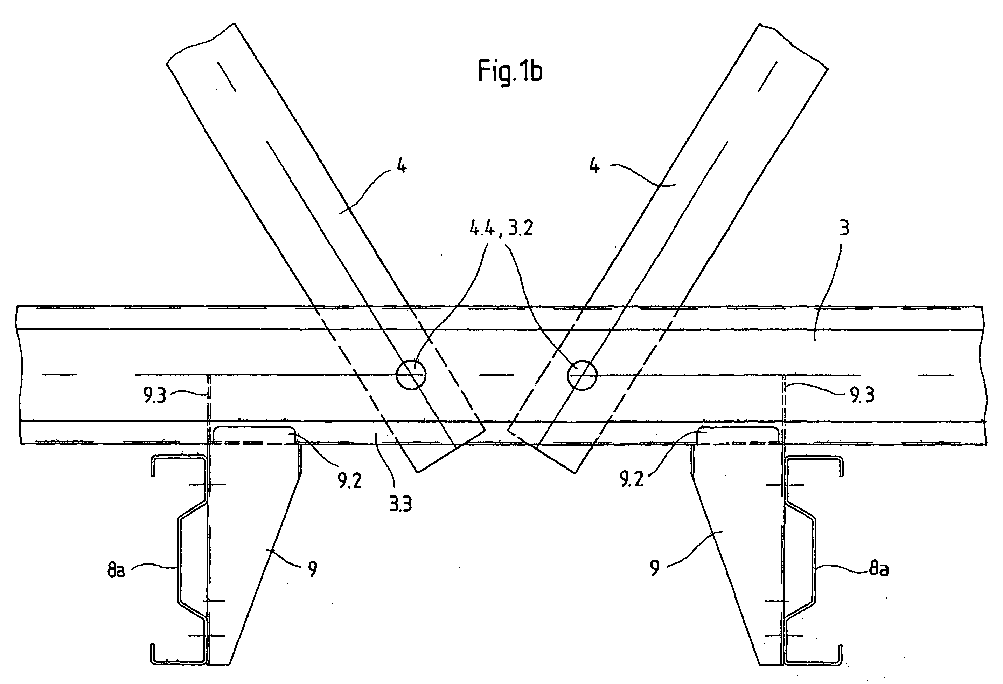

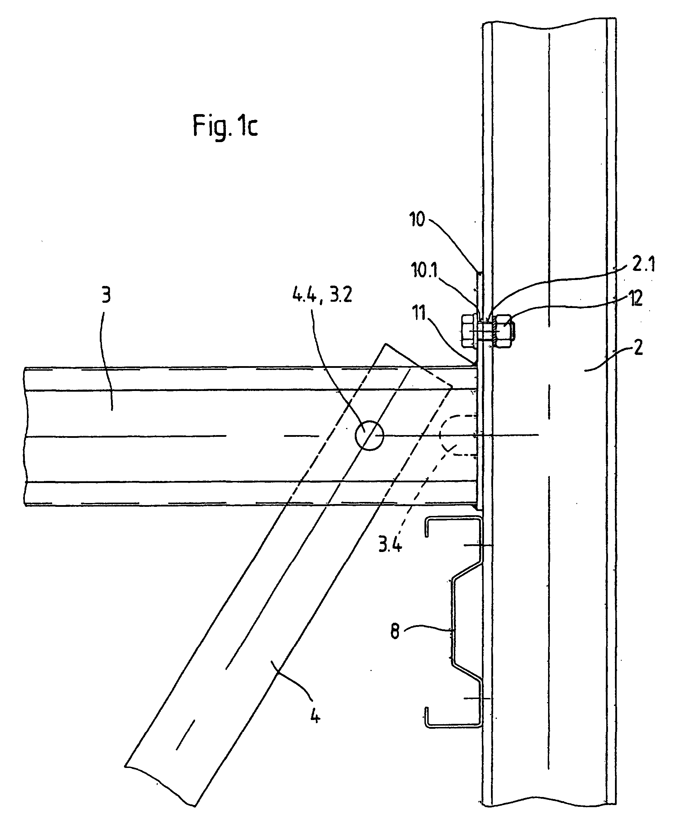

Das in Fig. 1 zu erkennende Regallager ist als dach- und wandtragendes Hochregallager ausgebildet. Das Dach 1 und die nicht dargestellte Wandverkleidung wird dabei von vertikalen Stützen 2, 2a getragen. Zwischen den vertikalen Stützen 2, 2a sind sich in Ein- und Auslagerungsrichtung erstreckende, horizontale Traversen 3, 3a angeordnet. Jeweils zwei sich übereinander befindende Traversen 3, 3a sind durch diagonale Streben 4 miteinander verbunden. Die an der Außenseite des Hochregallagers angeordneten Regalreihen sind zur Aufnahme einer Palette 5 bestücken Lagerguts 7 vorgesehen, während die durch Regalgassen 6 voneinander getrennten Regalreihen im Inneren des Hochregallagers mit zwei Paletten 5 jeweils von Seiten der Regalgassen 6 her bestückbar sind. Aufgrund der größeren Länge sind jeweils zwei sich übereinander befindende Traversen 3 der inneren Regalreihen durch zwei symmetrisch vom Bereich des stirnseitigen Endes der oberen in annähernd die Mitte der unteren Traverse V-förmig zueinander verlaufende diagonale Streben 4 miteinander verbunden, während jeweils eine diagonale Strebe 4 zwei übereinander befindliche Traversen 3a der äußeren Regalreihen miteinander verbindet.

Wie die vergrößerte Darstellung in Fig. 1a näher erkennen läßt, ruhen die mit Lagergut 7 bestückten Paletten 5 auf sich quer zur Ein- und Auslagerungsrichtung erstreckenden, horizontalen Tragprofilen 8, 8a, die einen im wesentlichen Σ-förmigen Querschnitt aufweisen. Die von der Regalgasse 6 her vorderen Tragprofile 8 sind direkt an die vertikalen Stützen 2, 2a angeschraubt, indes die hinteren Tragprofile 8a an Konsolen 9 angeschraubt sind, die mit den Traversen 3, 3a verschweißt sind. Die Anordnung der Tragprofile 8, 8a läßt sich ferner den Fig. 1b und 1c entnehmen.

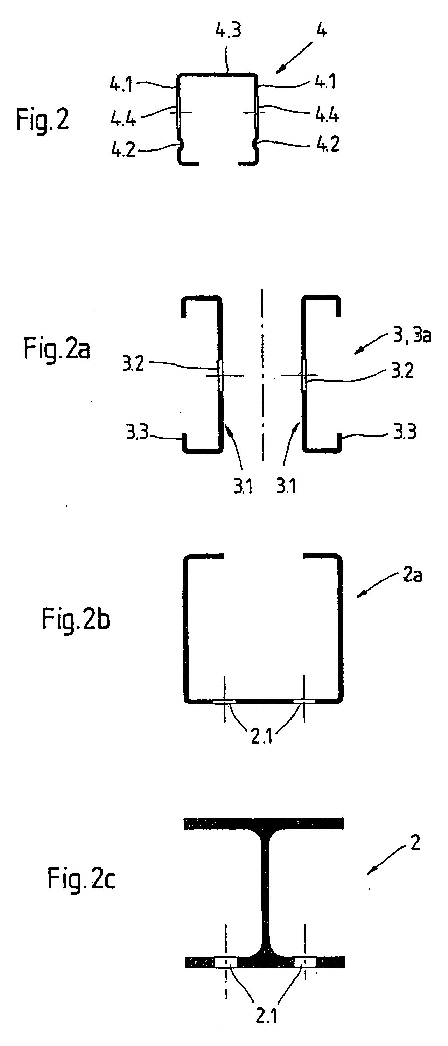

Wie weiterhin aus Fig. 2 ersichtlich, weisen die aus kaltgewalztem Stahl bestehenden diagonalen Streben 4 einen im wesentlichen U-förmigen Querschnitt auf. Zum Verbinden mit den Traversen 3, 3a sind die Schenkel 4.1 der einzelnen Streben 4 im Bereich der jeweiligen Enden einer Strebe 4 mit einer Durchgangsbohrung 4.4 zur Aufnahme einer Schraubverbindung versehen. An den Schenkeln 4.1 ist außerdem eine Einsenkung 4.2 ausgebildet, die einer etwaigen Lochleibung der Strebe 4 durch die Schraubverbindung entgegenwirkt.

In Fig. 2a ist der Querschnitt einer horizontalen Traverse 3, 3a dargestellt. Zu erkennen ist, daß sich eine Traverse 3, 3a aus zwei C-Profilen 3.1 zusammensetzt, die parallel und voneinander beabstandet angeordnet sind. Die mit ihrer offenen Seite voneinander abgewandten C-Profile 3.1 weisen einen Abstand voneinander auf, welcher der Breite der Basis 4.3 der diagonalen Streben 4 entspricht. Auf diese Weise ist es möglich, die diagonalen Streben 4 zwischen die Profile 3.1 der Traversen 3, 3a einzuspannen und mittels einer Schraubverbindung zu fixieren. Hinsichtlich letzterem sind die Profile 3.1 mit Durchgangsbohrungen 3.2 versehen, die im montierten Zustand des Hochregallagers fluchtend mit den Durchgangsbohrungen 4.4 der diagonalen Streben 4 übereinstimmen. Die horizontalen Traversen 3, 3a und die diagonalen Streben 4 lassen sich demzufolge durch jeweils eine einzige Schraubverbindung miteinander verbinden. Um eine möglichst geringe Lochleibungspressung zu erreichen, werden hierzu zweischnittige Schrauben verwendet.

Die Fig. 2b und 2c zeigen den Querschnitt der vertikalen Stützen 2, 2a. Die im oberen, statisch weniger belasteten Bereich des Hochregallagers eingesetzten vertikalen Stützen 2a weisen einen annähernd U-förmigen Querschnitt auf und sind aus kaltgewalztem Stahl gefertigt. Für den hochbelasteten, unteren Bereich des Hochregallagers sind hingegen Doppel-T-Träger aus warmgewalztem Stahl vorgesehen, die eine hohe Festigkeit aufweisen. Je nach Bauhöhe des Hochregallagers kann es ausreichend sein, auch für den unteren hochbelasteten Bereich kaltgewalzte und damit kostengünstig zu fertigende U-Profile zu verwenden. Die vertikalen Stützen 2, 2a sind mit Bohrungen 2.1 zum Anschluß der Tragprofile 8 und der horizontalen Traversen 3, 3a versehen. Wie insbesondere in Fig. 1c zu erkennen ist, sind die einzelnen Traversen 3, 3a an ihre jeweiligen stirnseitigen Enden mit einer Anschlußplatte 10 versehen, die durch eine Schweißverbindung 11 stoffschlüssig mit den beiden C-Profilen 3.1 einer Traverse 3, 3a verbunden ist und diese voneinander separiert. Die Anschlußplatte 10 ist mit Bohrungen 10.1 für sich gleichfalls durch die Bohrungen 2.1 der vertikalen Stützen 2, 2a erstreckende Schraubverbindungen 12 versehen. Die Anzahl der Schraubverbindungen 12, durch die die horizontalen Traversen 3, 3a mit den vertikalen Stützen 2, 2a verbunden werden, ist abhängig von der Materialstärke der Anschlußplatte 10. Beträgt die Dicke der Anschlußplatte 10 beispielsweise ca. 4 mm, so sind in der Regel zwei Schraubverbindungen 12 ausreichend, während bei einer Materialstärke der Anschlußplatte 10 von ca. 2 mm vier Schraubverbindungen 12 erforderlich sind, um den auftretenden Belastungen stand zu halten. Die Variation der Materialstärke der Anschlußplatte 10 entsprechend den jeweiligen Belastungen ermöglicht eine geringe Materialstärke für die C-Profile 3.1 der Traversen 3, 3a, so daß sich insgesamt eine leichtgewichtige Bauweise des Hochregallagers mit ausreichender statischer Sicherheit erzielen läßt.

Eine zudem einfache und schnelle Montage des Hochregallagers ergibt sich ferner durch die Verwendung gleicher, symmetrischer Traversen 3, 3a. Hierzu trägt auch bei, daß die Traversen 3, 3a mit den angeschweißten Konsolen 9 vorgefertigt werden können, so daß der Montageaufwand am Ort der Errichtung des Hochregallagers auf ein Minimum beschränkt ist und sich das Hochregallager damit in kürzester Zeit erstellen läßt. Die als vorgefertigte Baueinheit hergestellten Traversen 3, 3a können zusätzlich bereits lackiert oder mit einer anderen Oberflächenbehandlung versehen sein, so daß auch diesbezügliche Arbeiten am Ort der Endmontage entfallen.

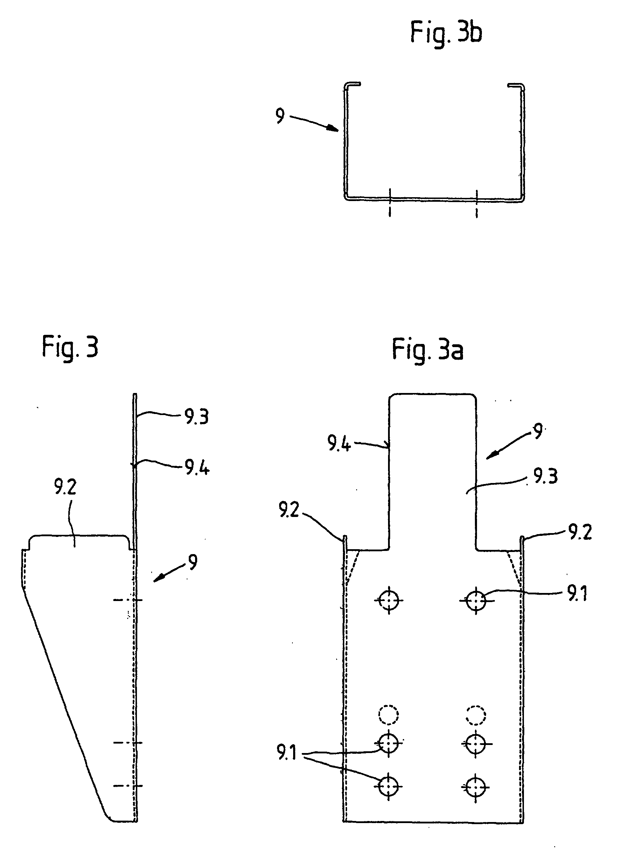

Eine detaillierte Ansicht einer Konsole 9 ist den Fig. 3 bis 3b zu entnehmen. Die kaltgewalzt hergestellte Konsole 9 besitzt - wie insbesondere aus Fig. 3b ersichtlich - einen U-förmigen Querschnitt, der spannungsoptimiert zum unteren Ende der Konsole 9 hin abnimmt, wie insbesondere aus Fig. 3 erkennbar. An ihrer Basis ist die Konsole 9 mit Bohrungen 9.1 zum Anschließen der Tragprofile 8a versehen. Die Schenkel der Konsole 9 weisen an ihrem oberen Ende einen überstehenden Abschnitt 9.2 auf, der im montierten Zustand den seitlichen Rand 3.3. der horizontalen Traversen 3, 3a umgreift, wie insbesondere in Fig. 1b ersichtlich. Fig. 1b läßt ferner erkennen, daß ein im oberen Bereich der Basis der Konsole 9 ausgebildeter Lappen 9.3 im montierten Zustand zwischen die beiden Profile 3.1 einer Traverse 3, 3a eingreift. Die Konsole 9 ist entlang der Seitenkanten 9.4 des Lappens 9.3 mit den C-Profilen 3.1 verschweißt. Auf diese Weise erhalten die Traversen 3, 3a eine zusätzlich Querstabilität. Indem die C-Profile 3.1 zwischen den überstehenden Abschnitten 9.2 und den Seitenkanten 9.4 zu liegen kommen und dadurch lagefixiert werden, ergibt sich zudem eine einfache Vorfertigung der Traversen 3, 3a.

Die Konsolen 9 sind bei den Traversen 3 symmetrisch zu deren Mitte auf der Unterseite angeordnet. Der Abstand zwischen den an die Konsolen 9 angeschraubten Tragprofilen 8a und den an die vertikalen Stützen 2, 2a angeschraubten Tragprofile 8 ist etwas geringer als die normierte Länge der Paletten 5, wodurch letztere eine sichere und stabile Lagerung erfahren. Nahe der Mitte der Traverse 3 und zwischen den beiden angeschweißten Konsolen 9 sind jeweils die unteren Enden zweier diagonalen Streben 4 in einem engen Abstand voneinander angeordnet, während deren oberen Enden nahe der Anschlußplatte 10 mit den Traversen 3, 3a verbunden sind. Auf diese Weise ergibt sich eine symmetrische V-Form der diagonalen Streben 4 zwischen zwei übereinander befindlichen Traversen 3, 3a, die eine besonders günstige statische Anordnung bildet. Je nach Anwendungsfall kann die Anschlußplatte 10 zusätzlich mit einem Knotenblech versehen sein, um einer höheren statischen Beanspruchung zu genügen. Das stirnseitige Ende der C-Profile 3.1 kann - wie in Fig. 1c angedeutet - zusätzlich mit einer Ausnehmung 3.4 versehen sein, die eine statisch besonders günstige Schraubverbindung 12 auf Höhe der geschlossenen Seite der C-Profile 3.1 gestattet.

Das zuvor beschrieben dach- und wandtragende Hochregallager zeichnet sich durch eine leichtgewichtige und einfach zu montierende/demontierende Konstruktion aus. Ursächlich hierfür ist zum einen, daß sämtliche Bauteile bei der Endmontage lediglich verschraubt werden, und zum anderen, daß die horizontalen Traversen 3, 3a aufgrund der Zusammensetzung aus C-Profilen 3.1 bei gleicher statischer Sicherheit besonders leichtgewichtig aus kaltgewalztem Blech gefertigt werden können. Statisch günstig wirkt sich darüber hinaus auch die Anordnung der diagonalen Streben 4 zwischen den beiden C-Profilen 3.1 einer Traverse 3, 3a aus. Nicht zuletzt wird auch durch die enge V-Form der diagonalen Streben 4 und der Befestigung derselben mittels jeweils einer einzigen Schraubverbindung an den jeweiligen Enden einer Strebe 4 einem stark belastbaren Hochregallager, daß sich zudem in kürzester Zeit errichten und zerlegen läßt, Rechnung getragen.

### Bezugszeichenliste

- 1: Dach
- 2, 2a: vertikale Stütze
- 2.1: Bohrung
- 3, 3a: horizontale Traverse
- 3.1: C-Profil
- 3.2: Durchgangsbohrung
- 3.3: Rand
- 3.4: Ausnehmung
- 4: diagonale Strebe
- 4.1: Schenkel
- 4.2: Einsenkung
- 4.3: Basis
- 4.4: Durchgangsbohrung
- 5: Palette
- 6: Regalgasse
- 7: Lagergut
- 8, 8a: Tragprofil
- 9: Konsole
- 9.1: Bohrung
- 9.2: Abschnitt
- 9.3: Lappen
- 9.4: Seitenkante
- 10: Anschlußplatte
- 10.1: Bohrung
- 11: Schweißverbindung
- 12: Schraubverbindung

## Patentansprüche

1. Regallager, insbesondere dach- und wandtragendes Hochregallager, für vorzugsweise palettisiertes Lagergut (7), bestehend aus einem Gestell vertikaler Stützen (2, 2a), zwischen denen sich in Ein- und Auslagerungsrichtung erstreckende, horizontale Traversen (3, 3a) angeordnet sind, wobei jeweils zwei sich übereinander befindende Traversen (3, 3a) durch wenigstens eine diagonale Strebe (4) miteinander verbunden sind,
**dadurch gekennzeichnet,**
**dass** die Traversen (3, 3a) aus jeweils zwei parallelen und voneinander beabstandeten Profilen (3.1) zusammengesetzt sind, zwischen denen die Enden der diagonalen Streben (4) angeordnet und durch jeweils eine einzige Schraubverbindung mit den Traversen (3, 3a) lösbar verbunden sind, wobei die beiden Profile (3.1) einer Traverse (3, 3a) an ihren stirnseitigen Enden durch eine Anschlußplatte (10) miteinander verbunden sind, die lösbar an den vertikalen Stützen (2, 2a) befestigbar ist.

2. Regallager nach Anspruch 1, **dadurch gekennzeichnet, dass** die Anschlussplatte (10) an die Profile (3.1) angeschweißt ist.

3. Regallager nach Anspruch 1 oder 2, **dadurch gekennzeichnet, dass** die beiden Profile (3.1) einer Traverse (3, 3a) einen im wesentlichen C-förmigen Querschnitt aufweisen und mit der offenen Seite voneinander abgewandt angeordnet sind.

4. Regallager nach einem der Ansprüche 1 bis 3, **dadurch gekennzeichnet, dass** sich quer zur Ein- und Auslagerungsrichtung erstreckende, horizontale Tragprofile (8a) lösbar mit an den Traversen (3, 3a) angeordneten Konsolen (9) verbindbar sind.

5. Regallager nach Anspruch 4, **dadurch gekennzeichnet, dass** auf der Unterseite der Traversen (3, 3a) jeweils zwei symmetrisch zur Mitte der Traverse (3, 3a) angeordnete Konsolen (9) mit beiden Profilen (3.1) der Traverse (3, 3a) verschweißt sind.

6. Regallager nach Anspruch 4 oder 5, **dadurch gekennzeichnet, dass** Tragprofile (8) an den vertikalen Stützen (2, 2a) parallel zu den an den Konsolen (9) befestigten Tragprofilen (8a) auf gleicher Höhe angeordnet sind.

7. Regallager nach einem der Ansprüche 4 bis 6, **dadurch gekennzeichnet, dass** die Tragprofile (8, 8a) einen annähernd Σ-förmigen Querschnitt aufweisen.

8. Regallager nach einem der Ansprüche 1 bis 7, **dadurch gekennzeichnet, dass** jeweils zwei sich übereinander befindende Traversen (3, 3a) durch zwei symmetrisch vom Bereich des stirnseitigen Endes der oberen in annähernd die Mitte der unteren Traverse (3, 3a) zueinander verlaufende diagonale Streben (4) miteinander verbunden sind.

9. Regallager nach Anspruch 8, **dadurch gekennzeichnet, dass** die diagonalen Streben (4) einen im wesentlichen U-förmigen Querschnitt aufweisen und im Bereich ihrer Enden mit jeweils einer einzigen Durchgangsbohrung zum Verbinden mit den Traversen (3, 3a) versehen sind.

10. Regallager nach einem der Ansprüche 1 bis 9, **dadurch gekennzeichnet, dass** die Profile (3.1) der Traversen (3, 3a), die Tragprofile (8, 8a) und die diagonalen Streben (4) kaltgewalzt sind.

11. Regallager nach einem der vorherigen Ansprüche, **dadurch gekennzeichnet, dass** die vertikalen Stützen (2, 2a) zum Teil aus warmgewalzten Doppel-T-Profilen und zum Teil aus kaltgewalzten Profilen mit U-förmigem Querschnitt bestehen.

## Claims

1. Rack store, in particular roof- and wall-bearing high-bay store, for preferably palletized storage articles (7), comprising a framework of vertical supports (2, 2a) between which horizontal crossmembers (3, 3a) extending in the storage and retrieval directions are arranged, in each case two crossmembers (3, 3a) located one above the other being connected to one another by at least one diagonal strut (4), **characterized in that** the crossmembers (3, 3a) are made up in each case of two parallel spaced-apart profiles (3.1), between which the ends of the diagonal struts (4) are arranged and are connected releasably to the crossmembers (3, 3a) by a single screw-connection in each case, the two profiles (3.1) of a crossmember (3, 3a) being connected to one another at their ends by a connection plate (10) which can be fastened releasably on the vertical supports (2, 2a).

2. Rack store according to Claim 1, **characterized in that** the connection plate (10) is welded to the profiles (3.1).

3. Rack store according to Claim 1 or 2, **characterized in that** the two profiles (3.1) of a crossmember (3, 3a) have an essentially C-shaped cross section and are arranged with their open sides directed away from one another.

4. Rack store according to one of Claims 1 to 3, **characterized in that** horizontal load-bearing profiles (8a) extending transversely to the storage and retrieval directions can be connected releasably to brackets (9) arranged on the crossmembers (3, 3a).

5. Rack store according to Claim 4, **characterized in that**, on the underside of the crossmembers (3, 3a), in each case two brackets (9) arranged symmetrically to the centre of the crossmember (3, 3a) are welded to the two profiles (3.1) of the crossmember (3, 3a).

6. Rack store according to Claim 4 or 5, **characterized in that** load-bearing profiles (8) are arranged on the vertical supports (2, 2a) parallel to the load-bearing profiles (8a), which are fastened on the brackets (9), at the same level.

7. Rack store according to one of Claims 4 to 6, **characterized in that** the load-bearing profiles (8, 8a) have an approximately Σ-shaped cross section.

8. Rack store according to one of Claims 1 to 7, **characterized in that** in each case two crossmembers (3, 3a) located one above the other are connected to one another by two diagonal struts (4) which run towards one another symmetrically from the region of the ends of the top, into more or less the centre of the bottom, crossmember (3, 3a).

9. Rack store according to Claim 8, **characterized in that** the diagonal struts (4) have an essentially U-shaped cross section and, in the region of their ends, are each provided with a single through-passage bore for the connection to the crossmembers (3, 3a).

10. Rack store according to one of Claims 1 to 9, **characterized in that** the profiles (3.1) of the crossmembers (3, 3a), the load-bearing profiles (8, 8a) and the diagonal struts (4) are cold-rolled.

11. Rack store according to one of the preceding claims, **characterized in that** the vertical supports (2, 2a) comprise, in part, hot-rolled I-profiles and, in part, cold-rolled profiles of U-shaped cross section.

## Revendications

1. Magasin à rayonnage, en particulier magasin à rayonnage surélevé supportant un toit et un mur, pour de la marchandise stockée de préférence palettisée, constitué par un châssis de montants (2, 2a) verticaux, entre lesquels sont agencées des traverses horizontales (3, 3a) s'étendant en direction de stockage et de déstockage, deux traverses (3, 3a) respectives situées l'une au-dessus l'autre étant reliées l'une à l'autre par au moins une entretoise (4) diagonale, **caractérisé en ce que** les traverses (3, 3a) sont composées chacune par au moins deux profils (3.1) parallèles et espacés l'un de l'autre, entre lesquels les extrémités des entretoises (4) diagonales sont agencées et reliées chacune de manière détachable aux traverses (3, 3a) par une seule liaison vissée, les deux profils (3.1) d'une traverse (3, 3a) étant reliés l'un à l'autre sur leurs extrémités frontales par une plaque de raccordement (10) qui peut être fixée de manière détachable sur les montants (2, 2a) verticaux.

2. Magasin à rayonnage selon la revendication 1, **caractérisé en ce que** la plaque de raccordement (10) est soudée aux profils (3.1).

3. Magasin à rayonnage selon l'une ou l'autre des revendications 1 et 2, **caractérisé en ce que** les deux profils (3.1) d'une traverse (3, 3a) présentent une section transversale sensiblement en forme de C et sont agencés avec leurs côtés ouverts détournés l'un de l'autre.

4. Magasin à rayonnage selon l'une quelconque des revendications 1 à 3, **caractérisé en ce que** des profils porteurs horizontaux (8a) s'étendant perpendiculairement à la direction de stockage et de déstockage peuvent être reliés de manière détachable avec des consoles (9) agencées sur les traverses (3, 3a).

5. Magasin à rayonnage selon la revendication 4, **caractérisé en ce que** sur la face inférieure des traverses (3, 3a), deux consoles (9) respectives agencées symétriquement au milieu de la traverse (3, 3a) sont soudées aux deux profils (3.1) de la traverse (3, 3a).

6. Magasin à rayonnage selon l'une ou l'autre des revendications 4 et 5, **caractérisé en ce que** des profils porteurs (8) sont agencés à la même hauteur sur les montants (2, 2a) verticaux, parallèlement aux profils porteurs (8a) fixés sur les consoles (9).

7. Magasin à rayonnage selon l'une quelconque des revendications 4 à 6, **caractérisé en ce que** les profils porteurs (8, 8a) présentent une section transversale approximativement en forme de Σ□

8. Magasin à rayonnage selon l'une quelconque des revendications 1 à 7, **caractérisé en ce que** deux traverses (3, 3a) respectives situées l'une au-dessus de l'autre sont reliées l'une à l'autre par deux entretoises (4) s'étendant en diagonale l'une vers l'autre de manière symétrique depuis la région de l'extrémité frontale de la traverse supérieure jusque approximativement au milieu de la traverse inférieure (3, 3a).

9. Magasin à rayonnage selon la revendication 8, **caractérisé en ce que** les entretoises (4) diagonales présentent une section transversale sensiblement en forme de U et sont pourvues chacune, dans la région de leurs extrémités, d'un seul perçage traversant pour les relier aux traverses (3, 3a).

10. Magasin à rayonnage selon l'une quelconque des revendications 1 à 9, **caractérisé en ce que** les profils (3.1) des traverses (3, 3a), les profils porteurs (8, 8a) et les entretoises diagonales (4) sont laminés à froid.

11. Magasin à rayonnage selon l'une quelconque des revendications précédentes, **caractérisé en ce que** les montants verticaux (2, 2a) sont constitués en partie de profils en double T laminés à chaud et en partie en profils laminés à froid à section transversale en forme de U.
